# FASCICULE DE BREVET EUROPEEN

(11) **EP 0 844 174 B1**
(45) Date de publication et mention de la délivrance du brevet: **27.08.2003**
(21) Numéro de dépôt: 97402790.6
(22) Date de dépôt: 20.11.1997
(51) Int. Cl.: B64D 27/26

(54) **Suspension avant redondante pour turbomachine**
Redundantes, vorderes Aufhängungssytem für ein Turbotriebwerk
Redundant front suspension for a turbo engine

(30) Priorité: 21.11.1996 FR 9614191
(43) Date de publication de la demande: 27.05.1998
(73) Titulaire: Snecma Moteurs, 75015 Paris (FR)
(72) Inventeur: Demouzon, Francis Michel, 77240 Cesson (FR); Fer, René Pierre, 77190 Dammarie Les Lys (FR); Huet, Patrick Jean Alibert, 91090 Lisses (FR); Marnas, Laurent Pierre Elysée Gaston, 77000 Vaux Le Penil (FR)

(56) Documents cités:
- WO-A-93/11041
- FR-A- 2 217 549
- US-A- 4 065 077

## Description

L'invention concerne une suspension avant redondante d'une turbomachine destinée à être fixée sur un mât porté par un avion selon le préambule de la revendication 1. Le mot "avant" étant pris par rapport au sens de l'écoulement du flux dans le moteur pour désigner la partie de la turbomachine éloignée de la zone d'éjection du flux.

De façon connue, une turbomachine d'aviation est accrochée à un mât, conçu pour assurer la transmission mécanique des efforts entre laturbomachine et la structure de l'avion, au moyen d'un dispositif de suspension avant et d'un dispositif de suspension arrière. Ces dispositifs de suspension doivent supporter les efforts mécaniques, selon l'axe vertical Z, dus à la masse de la turbomachine, et les efforts dynamiques, selon l'axe transversal Y, induits par les mouvements de l'avion. Les charges générées par la poussée du moteur, dirigées selon l'axe longitudinal X, sont transmises à l'un des dispositifs de suspension par des barres de reprise de poussée inclinées situées de part et d'autre de la turbomachine.

De plus, pour des raisons évidentes de sécurité, la suspension de la turbomachine doit être redondante. Dans ce cas, il est possible de choisir entre deux solutions : soit doubler toutes les pièces, chacune étant capable de supporter seule les efforts fixés, soit adjoindre des composants qui sont disposés en attente et qui ne supportent les efforts qu'en cas de rupture de la suspension principale.

US-A-4 065 077 décrit une suspension avant d'une turbomachine sur un mât, dans laquelle deux chapes comportent une extrémité montée avec jeu de façon à reprendre les efforts en cas de rupture de la suspension normale. Cependant la suspension n'est pas complètement redondante car ces deux chapes participent également à 1a transmission des efforts au mât lors du fonctionnement normal, ce qui ne permet pas d'assurer une sécurité suffisante en cas de rupture de l'un des éléments de la suspension normale.

Le but de l'invention est d'équiper une suspension normale avant d'une turbomachine sur un mât avec des pièces en attente susceptibles de supporter les efforts selon l'un quelconque au moins des axes X, Y, Z en cas de défaillance de la suspension normale.

Selon l'invention le dispositif de suspension de sécurité est distinct du dispositif de suspension normal et comporte un premier support destiné à être fixé sur le mât et qui présente une chape verticale selon les axes X or Z capable de reprendre les efforts selon les axes X et Z et une chape horizontale selon les axes X et Y capable de reprendre les efforts selon l'axe Y, et un deuxième support destiné à être fixé sur le carter intermédiaire de la turbomachine et qui présente une chape verticale selon les axes X et Z capable de reprendre les efforts selon les axes X et Z et un doigt vertical selon l'axe Z capable de reprendre les efforts selon l'axe Y, ledit doigt étant disposé avec un jeu dans un alésage menagé dans la chape horizontale du premier support, la chape verticale du premier support et la chape verticale du deuxième support présentant des alésages coaxiaux pour le passage d'une broche transversale fixée sur l'une desdites chapes et traversant avec un jeu l'alésage de l'autre chape.
En fonctionnement normal, seul le support de base encaisse les efforts et les charges transmis entre la turbomachine et le mât. Grâce aux jeux prévus entre le doigt ou la broche et les alésages qui les reçoivent dans les chapes, le premier support et le deuxième support sont mécaniquement dissociés.

Les avantageuses dispositions suivantes sont de préférence adoptées
la chape verticale du premier support comporte deux oreilles disposées de part et d'autre de la chape verticale du deuxième support, et sans contact avec cette dernière ;
la broche transversale est fixée sur lesdites oreilles ;
la chape verticale du premier support s'étend sous la face inférieure de la chape horizontale dudit premier support ;
l'alésage ménagé dans la chape horizontale du premier support pour recevoir le doigt du deuxième support est disposé dans la partie avant de ladite chape horizontale ;
le premier support présente au-dessus de sa chape horizontale et à l'arrière de cette dernière une plaque pour sa fixations sur le mât, ladite plaque étant reliée à ladite chape horizontale par une paroi de rigidification.

D'autres avantages et caractéristiques de l'invention ressortiront à la lecture de la description suivante faite à titre d'exemple et en référence aux dessins annexés dans lesquels:
la figure 1 montre en perspective l'ensemble de la suspension avant redondante selon l'invention monté sur le mât d'un avion, la turbomachine n'étant pas représentée par souci de clarté ;
la figure 2 est une représentation en perspective de la suspension normale de la turbomachine et des barres de reprise de poussée ;
la figure 3 montre le mât de l'avion et le talon associé au mât ;
la figure 4 montre le dispositif de suspension de sécurité seul ;
la figure 5 est une représentation en perspective du premier support du dispositif de suspension de sécurité selon l'invention ;
la figure 6 est une représentation en perspective du deuxième support du dispositif de suspension de sécurité selon l'invention ;
la figure 7 est une coupe de la suspension avant montrée sur la figure 1 selon un plan perpendiculaire à l'axe longitudinal X et passant par l'axe de la broche de liaison du premier support et du deuxième support ; et
la figure 8 est une coupe de la suspension avant montrée sur la figure 1 selon un plan perpendiculaire à l'axe longitudinal X et passant par l'axe du doigt du deuxième support.

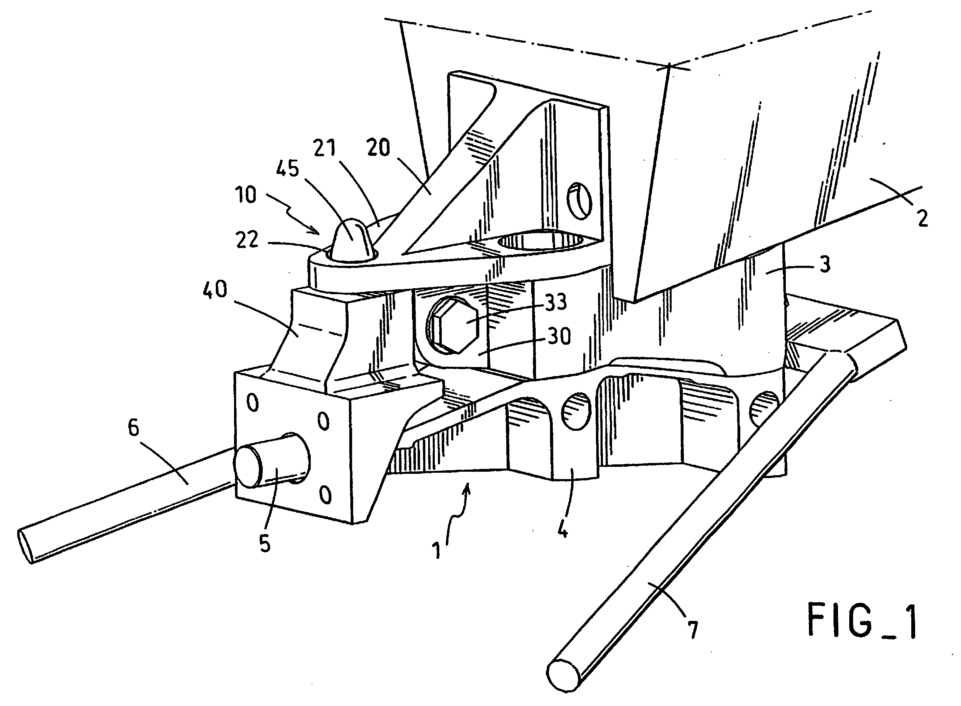

La figure 1 montre une suspension avant redondante 1 d'une turbomachine sur le mât 2 d'un avion. Par souci de clarté, la turbomachine n'est pas représentée sur les dessins. Il suffit de savoir que le point de suspension avant de la turbomachine est prévu sur le carter intermédiaire de cette turbomachine.

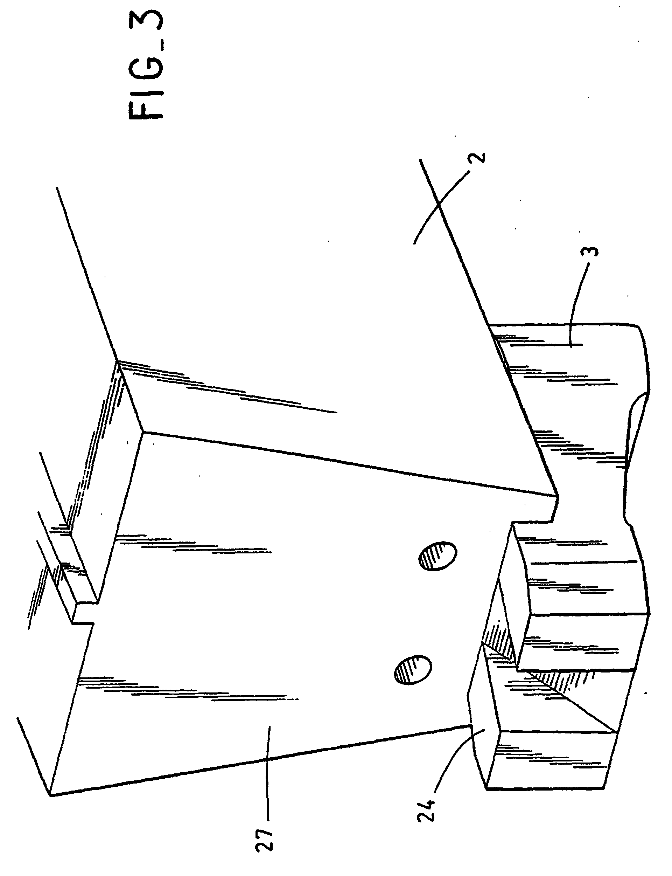

Le mât 2 est équipé d'un talon 3 qui contient tous les éléments de fixation de la suspension 1 sur le mât, ainsi que cela est représenté sur les figures 1 et 3.

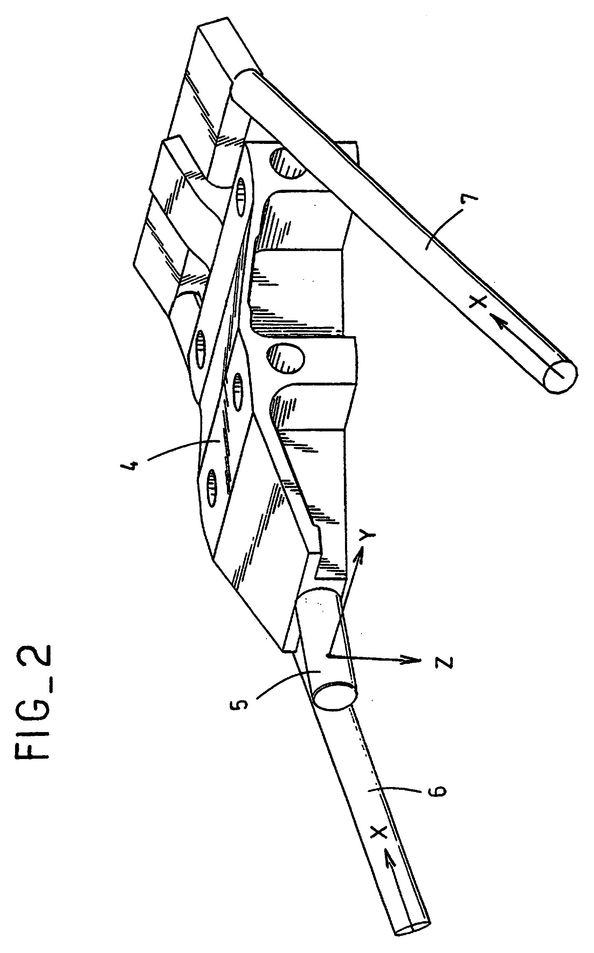

La suspension normale avant de la turbomachine comporte un support de base 4, représenté sur les figures 1 et 2. Ce support de base 4 est fixé sous le talon 3. Il s'étend vers l'avant de l'avion, dans le sens de l'avancement en vol de ce dernier. Son extrémité avant comporte un axe de support 5 qui est dirigé selon l'axe longitudinal X du trièdre de référence de l'avion et qui constitue l'axe de suspension avant de la turbomachine. Cet axe de support 5 permet la reprise des efforts dirigés suivant l'axe vertical Z et l'axe transversal Y du trièdre de référence, qui sont générés par la masse du moteur, et les efforts dynamiques dus aux accélérations verticales et latérales provoquées par les mouvements de l'avion suivant ces directions.

Les références 6 et 7 représentent les barres de reprise de poussée qui sont inclinées, et dont les extrémités avant sont fixées latéralement sur le carter intermédiaire de la turbomachine. Ces barres de reprise de poussée 6 et 7 supportent les efforts induits par la poussée du moteur et qui est dirigée selon l'axe longitudinal X du trièdre de référence.

A la suspension normale décrite ci-dessus, est adjoint un dispositif de suspension de sécurité 10 qui ne travaille qu'en cas de défaillance de la suspension normale.

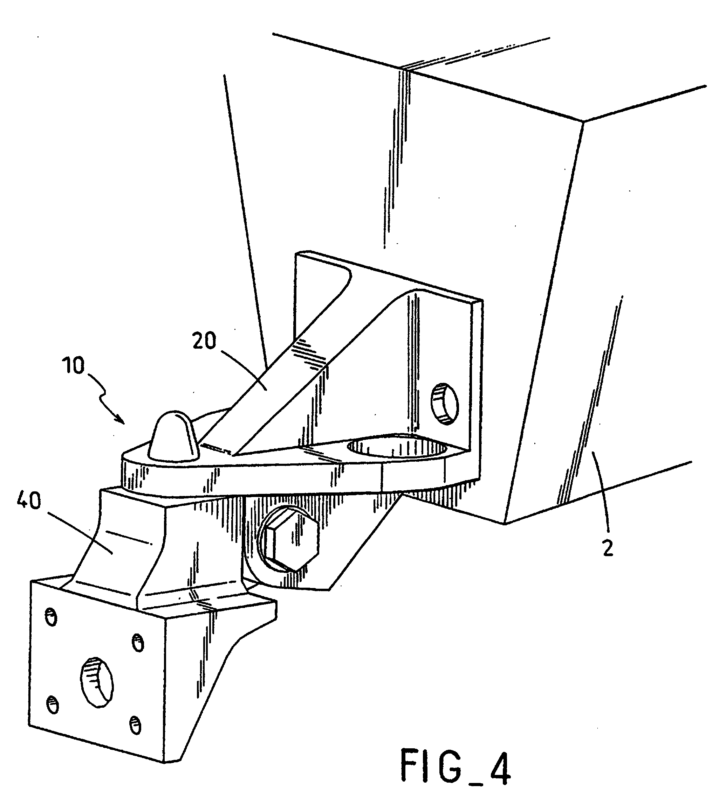

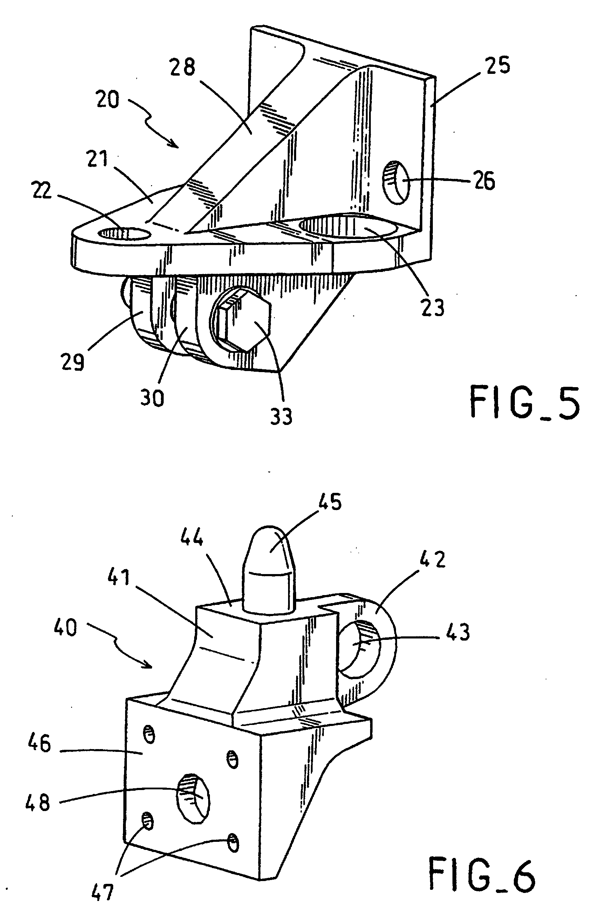

Ce dispositif de suspension de sécurité 10 comporte un premier support 20 fixé au mât 2 et un deuxième support 40 fixé au carter intermédiaire de la turbomachine. Le premier support 20 est montré sur les figures 1, 4 et 5, et le deuxième support 40 est représenté sur les figures 1, 4 et 6.

Le premier support 20 comporte une chape horizontale 21 qui présente à l'avant un alésage vertical 22 et à l'arrière des orifices 23 pour sa fixation par boulonnage sur la partie supérieure avant 24 du talon 3 équipant le mât 2. Une plaque 25 s'étend verticalement vers le haut à partir du bord arrière de la chape horizontale 21. Cette plaque 25 présente des orifices 26 pour sa fixation par boulonnage sur une paroi frontale 27 du mât 2. Une paroi verticale de rigidification 28 relie la plaque 25 à la chape horizontale 21. Sous la face inférieure de la chape horizontale 21 et à l'arrière de l'alésage vertical 22, sont prévues deux oreilles parallèles 29, 30 qui s'étendent dans des plans parallèles aux axes X et Z du trièdre de référence. Ces oreilles 29, 30 sont munies d'alésages coaxiaux 31 et 32 destinés au passages d'une broche 33. Le premier support 20 est réalisé en une seule pièce monobloc et il est dimensionné de telle manière que les oreilles 29 et 30 puissent reprendre les efforts produits par la turbomachine selon les axes X et Z, et que la chape horizontale 21 puisse reprendre les efforts produits par la turbomachine selon l'axe Y, en cas de défaillance de la suspension normale.

Le deuxième support 40, également réalisé en une seule pièce, comporte un corps 41 en forme de pyramide tronquée qui présente sur sa face verticale arrière une chape verticale 42 sous forme d'une oreille présentant un alésage 43, et sur sa face supérieure 44, un doigt vertical 45. Sous le corps 41, s'étend une plaque 46 qui est parallèle aux axes Y, Z et qui comporte des orifices 47 pour la fixation par boulonnage du deuxième support 40 sur le carter intermédiaire de la turbomachine, et un alésage 48 permettant le passage et les mouvements relatifs de l'axe de support 5 du support de base 4. Le deuxième support 40 est dimensionné de telle manière que la chape verticale 42 puisse supporter les efforts exercés par la turbomachine suivant les axes X et Z et de telle manière que le doigt 45 puisse reprendre les efforts suivant l'axe des Y en cas de défaillance de la suspension normale.

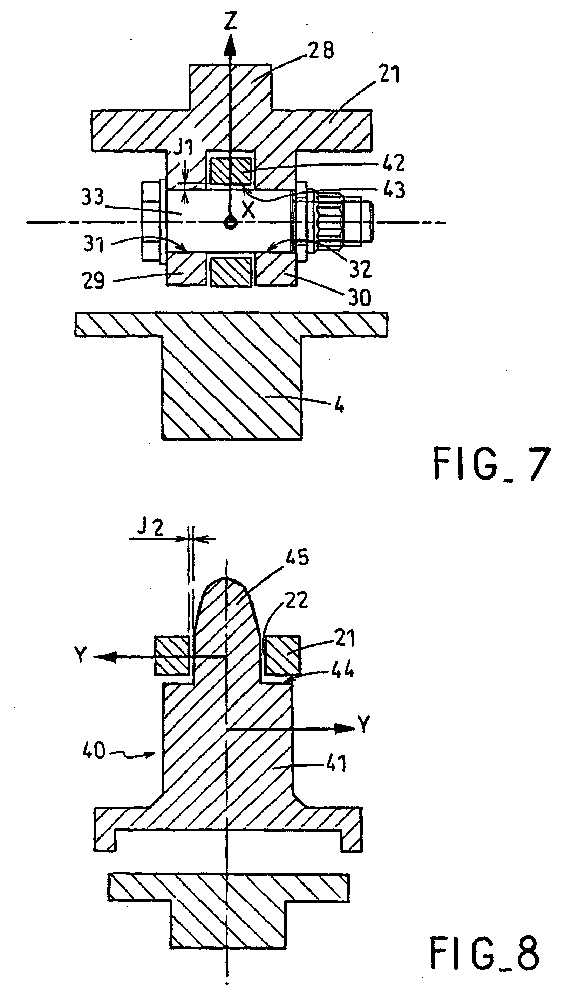

Les dimensions du premier support 20 et du deuxième support 40 sont telles que, lorsque la turbomachine est suspendue au mât 2 par la support de base 4, le premier support 20 étant fixé au mât et le deuxième support 40 au carter intermédiaire, le doigt 45 est positionné avec un jeu J2 dans l'alésage 22 de la chape horizontale 21 du premier support, et la broche 33 traverse avec un jeu J1 l'alésage 43 de la chape verticale 42 du deuxième support 40, cette chape verticale 42 étant disposée avec jeu entre les oreilles 29 et 30 du premier support 20, ainsi que cela est représenté sur les figures 7 et 8. Comme on le voit sur les figures 7 et 8, la face supérieure 44 du deuxième support 40 est écartée de la face inférieure du flasque horizontal 21 du premier support, et le premier et le deuxième supports ne touchent pas le support de base 4 constituant la suspension normale.

En l'absence de défaillance de la suspension normale 4 et des barres de reprise de poussée 6,7, le premier support 20 et le deuxième support 40 n'ont aucune liaison entre eux.

En cas de défaillance de la suspension normale, par suite de rupture de l'axe de support 5 du support de base 4, par exemple, les efforts suivant l'axe transversal Y sont supportés par le doigt 45 et la chape horizontale 21 du premier support 20, les efforts suivant l'axe vertical Z sont supportés par la chape verticale 42 du deuxième support 40, la broche 33 et les oreilles 29 et 30, et les charges suivant l'axe longitudinal X sont supportées par les bielles 6 et 7.

En cas de rupture de l'une des bielles 6 et 7, les charges suivant l'axe longitudinal X sont supportées par la chape verticale 42 du deuxième support 40, la broche 33 et les oreilles 29, 30. Les efforts suivant les axes Y et Z sont alors supportés par la suspension normale.

Enfin, en cas de rupture de l'axe de support 5 et de l'une des bielles 6 et 7, la totalité des efforts et des charges est transmise par le deuxième support 40 au premier support 20.

Dans la description faite ci-dessus, le premier support 20 est monté sur le talon 3. II est évident que ces deux pièces pourraient être réalisées sous la forme d'une pièce unique.

## Revendications

1. Suspension avant redondante d'une turbomachine destinée à être fixée sur un mât porté par un avion, cette suspension comportant, d'une part, un support de base (4) et des barres de reprise de poussée (6, 7), ce support de base (4) destiné à être fixé au mât et relié au carter intermédiaire de la turbomachine pour réaliser la suspension normale avant de la turbomachine, en assurant la transmission mécanique des efforts selon l'axe transversal Y et l'axe vertical Z entre le carter intermédiaire et le mât, pendant que les barres de reprise de poussée (6, 7) destinées à être interposées entre la turbomachine et le support de base (4) assurent la transmission au mât des efforts de poussée selon l'axe longitudinal X, et, d'autre part, un dispositif de suspension de sécurité(10) ne travaillant qu'en cas de rupture d'un élément de la suspension normale avant,
**caractérisée par le fait que** ledit dispositif de suspension de sécurité (10) comporte
un premier support (20) destiné á être fixé sur le mât et qui présente une chape verticale (29, 30) selon les axes X et Z capable de reprendre les efforts selon les axes X et Z et une chape horizontale (21) selon les axes X et Y capable de reprendre les efforts selon l'axe Y, et
un deuxième support (40) destiné à être fixé sur le carter intermédiaire de la turbomachine et qui présente une chape verticale (42) selon les axes X et Z capable de reprendre les efforts selon les axes X et Z et un doigt vertical (45) selon l'axe Z capable de reprendre les efforts selon l'axe Y, ledit doigt étant disposé avec un jeu (J2) dans un alésage (22) ménagé dans la chape horizontale (21) du premier support (20), la chape verticale (29, 30) du premier support (20) et la chape verticale (42) du deuxième support (40) présentant des alésages coaxiaux (31, 32, 43) pour le passage d'une broche (33) transversale fixée sur l'une desdites chapes (29, 30) et traversant avec un jeu (J1) l'alésage (43) de l'autre chape (42).

2. Suspension selon la revendication 1, **caractérisée par le fait que** la chape verticale du premier support (20) comporte deux oreilles (29, 30) disposées de part et d'autre de la chape verticale (42) du deuxième support (40), et sans contact avec cette dernière.

3. Suspension selon la revendication 2, **caractérisée par le fait que** la broche (33) est fixée sur lesdites oreilles (29, 30).

4. Suspension selon l'une quelconque des revendications 1 à 3, **caractérisée par le fait que** la chape verticale (29, 30) du premier support (20) s'étend sous la face inférieure de la chape horizontale (21) dudit premier support (20).

5. Suspension selon la revendication 4, **caractérisée par le fait que** l'alésage (22) ménagé dans la chape horizontale (21) du premier support (20) pour recevoir le doigt du deuxième support (40) est disposé dans la partie avant de ladite chape horizontale (21) , et à l'avant de la chape verticale (29, 30) dudit premier support (20).

6. Suspension selon la revendication 5, **caractérisée par le fait que** le premier support (20) présente, au-dessus de sa chape horizontale (21) et à l'arrière de cette dernière, une plaque verticale (25) selon les axes Y er Z pour sa fixation sur le mât, ladite plaque (25) étant reliée à ladite chape horizontale (21) par une paroi de rigidification (28).

## Patentansprüche

1. Redundantes, vorderes Aufhängungssystem für ein Turbotriebwerk, das dazu bestimmt ist, an einem Stiel befestigt zu werden, der an einem Flugzeug sitzt, wobei dieses Aufhängungssystem einerseits eine Basishalterung (4) sowie Schubaufnahmestangen (6, 7) aufweist, wobei diese Basishalterung (4) dazu bestimmt ist, an dem Stiel befestigt und mit dem Zwischengehäuse des Turbotriebwerks verbunden zu werden, um die vordere, normale Aufhängung des Turbotriebwerks herzustellen, indem sie die mechanische Übertragung von dessen Kräften auf der Querachse Y und der vertikalen Achse Z zwischen dem Zwischengehäuse und dem Stiel gewährleistet, während die Schubaufnahmestangen (6, 7), die dazu vorgesehen sind, zwischen dem Turbotriebwerk und der Basishalterung (4) angeordnet zu werden, die Übertragung der Schubkräfte entlang der Längsachse X auf den Stiel gewährleisten, und andererseits eine Sicherheitsaufhängungsvorrichtung (10) aufweist, die nur im Falle eines Bruchs eines Elements der vorderen, normalen Aufhängung arbeitet,
**dadurch gekennzeichnet,**
**dass** diese Sicherheitsaufhängungsvorrichtung (10) aufweist:
eine erste Halterung (20), die dazu bestimmt ist, an dem Stiel befestigt zu werden, und ein vertikales Gabelgelenk (29, 30) auf den Achsen X und Z aufweist, das geeignet ist, die Kräfte entlang der Achsen X und Z aufzunehmen, sowie ein horizontales Gabelgelenk (21) auf den Achsen X und Y aufweist, das geeignet ist, die Kräfte entlang der Achse Y aufzunehmen, und
- eine zweite Halterung (40), die dazu bestimmt ist, an dem Zwischengehäuse des Turbotriebwerks befestigt zu werden, sowie einen vertikalen Zapfen (45) auf der Achse Z aufweist, der geeignet ist, die Kräfte entlang der Achse Y aufzunehmen, wobei dieser Zapfen mit einem Spiel (J2) in einer Bohrung (22) in dem horizontalen Gabelgelenk (21) der ersten Halterung (20) angeordnet ist, wobei das vertikale Gabelgelenk (29, 30) der ersten Halterung (20) und das vertikale Gabelgelenk (42) der zweiten Halterung (40) koaxiale Bohrungen (31, 32, 43) für den Durchlass eines quer verlaufenden Stifts (33) aufweisen, der an einem dieser Gabelgelenke (29, 30) befestigt ist und sich mit einem Spiel (J1) durch die Bohrung (43) des anderen Gabelgelenks (42) erstreckt.

2. Aufhängungssystem nach Anspruch 1,
**dadurch gekennzeichnet,**
**dass** das vertikale Gabelgelenk der ersten Halterung (20) aus zwei Schenkeln (29, 30) besteht, die beiderseits des vertikalen Gabelgelenks (42) der zweiten Halterung (40) angeordnet sind, ohne mit letzterer in Kontakt zu sein.

3. Aufhängungssystem nach Anspruch 2,
**dadurch gekennzeichnet,**
**dass** der Stift (33) an diesen Schenkeln (29, 30) befestigt ist.

4. Aufhängungssystem nach einem der Ansprüche 1 bis 3,
**dadurch gekennzeichnet,**
**dass** sich das vertikale Gabelgelenk (29, 30) der ersten Halterung (20) unter der Unterseite des horizontalen Gabelgelenks (21) dieser ersten Halterung (20) erstreckt.

5. Aufhängungssystem nach Anspruch 4,
**dadurch gekennzeichnet,**
**dass** die in dem horizontalen Gabelgelenk (21) der ersten Halterung (20) ausgeführte Bohrung (22) zur Aufnahme des Zapfens der zweiten Halterung (40) in dem vorderen Teil dieses horizontalen Gabelgelenks (21) und vor dem vertikalen Gabelgelenk (29, 30) dieser ersten Halterung (20) angeordnet ist.

6. Aufhängungssystem nach Anspruch 5,
**dadurch gekennzeichnet,**
**dass** die erste Halterung (20) über ihrem horizontalen Gabelgelenk (21) und hinter diesem zu ihrer Befestigung an dem Stiel eine vertikale Platte (25) entlang der Achsen Y und Z aufweist, wobei diese Platte (25) durch eine Versteifungswand (28) mit diesem horizontalen Gabelgelenk (21) verbunden ist.

## Claims

1. Redundant front suspension system for a turbine engine intended to be fixed on a pylon carried by an aircraft, this suspension system including, on the one hand, a base support (4) and thrust take-up rods (6,7), this base support (4) intended to be fixed to the pylon and connected to the intermediate casing of the turbine engine to form the normal front suspension system of the turbine engine by ensuring the mechanical transmission of the forces along the transverse axis Y and the vertical axis Z between the intermediate casing and the pylon while the thrust take-up rods (6,7) intended to be interposed between the turbine engine and the base support (4) ensure transmission to the pylon of the thrust forces along the longitudinal axis X and, on the other hand, including an emergency suspension device (10) which operates only in the event of failure of an element of the normal front suspension system, **characterized in that** the said emergency suspension device (10) includes
a first support (20), which is intended to be fixed to the pylon and has a vertical yoke (29, 30) along the X and Z axes capable of taking up the forces along the X and Z axes and a horizontal yoke (21) along the X and Y axes capable of taking up the forces along the Y axis, and
a second support (40), which is intended to be fixed on the intermediate casing of the turbine engine and has a vertical yoke (42) along the X and Z axes capable of taking up the forces along the X and Z axes and a vertical pin (45) along the Z axis capable of taking up the forces along the Y axis, the said pin being arranged with a clearance (J2) in a bore (22) formed in the horizontal yoke (21) of the first support (20), the vertical yoke (29, 30) of the first support (20) and the vertical yoke (42) of the second support (40) having coaxial bores (31, 32, 43) to allow the passage of a horizontal pin (33) fixed on one of the said yokes (29, 30) and passing with a clearance (J1) through the bore (43) of the other yoke (42).

2. Suspension system according to Claim 1, **characterized in that** the vertical yoke of the first support (20) includes two lugs (29, 30) disposed on opposite sides of the vertical yoke (42) of the second support (40) without contact therewith.

3. Suspension system according to Claim 2, **characterized in that** the pin (33) is fixed on the said lugs (29, 30).

4. Suspension system according to any one of Claims 1 to 3, **characterized in that** the vertical yoke (29, 30) of the first support (20) extends beneath the lower surface of the horizontal yoke (21) of the said first support (20).

5. Suspension system according to Claim 4, **characterized in that** the bore (22) formed in the horizontal yoke (21) of the first support (20) to receive the pin of the second support (40) is disposed in the forward part of the said horizontal yoke (21), in front of the vertical yoke (29, 30) of the said first support (20).

6. Suspension system according to Claim 5, **characterized in that**, above its horizontal yoke (21) and behind the latter, the first support (20) has a vertical plate (25) along the Y and Z axes for fixing it to the pylon, the said plate (25) being connected to the said horizontal yoke (21) by a stiffening wall (28).
